Europäisches Patentamt

European Patent Office

Office européen des brevets

(11) Veröffentlichungsnummer: **0 335 062**
**A1**

(12) **EUROPÄISCHE PATENTANMELDUNG**

(21) Anmeldenummer: 89100076.2

(22) Anmeldetag: 04.01.89

(51) Int. Cl.⁴: **B65G 49/00 , B65G 47/61**

(30) Priorität: 30.03.88 DE 3810794
04.06.88 DE 3819103

(43) Veröffentlichungstag der Anmeldung:
04.10.89 Patentblatt 89/40

(84) Benannte Vertragsstaaten:
AT BE CH ES FR GB GR IT LI LU NL SE

(71) Anmelder: Jennewein, Manfred A.
Meisenweg 10
D-6082 Mörfelden-Walldorf(DE)

(72) Erfinder: Jennewein, Manfred A.
Meisenweg 10
D-6082 Mörfelden/Walldorf(DE)
Erfinder: Ballweg, Achim, Dipl.-Ing.
Am Hain 4
D-6650 Homburg/Saar(DE)

(74) Vertreter: Knoblauch, Ulrich, Dr.-Ing.
Kühhornshofweg 10
D-6000 Frankfurt am Main 1(DE)

(54) Vorrichtung zum Aufhängen von Kleidungsstücken auf Kleiderbügeln.

(57) Bei einer Vorrichtung zum Aufhängen von Kleidungsstücken auf Kleiderbügeln, mit wenigstens einem dem menschlichen Oberkörper in grober Annäherung nachgebildeten Kleiderträger (4), der in seiner Oberseite einen nach oben offenen Aufnahmeschlitz (7) für einen Kleiderbügel aufweist, ist in einem Lade- und Entladebereich ein Kleiderbügel (9) mit hochragendem Haken (10) selbsttätig in den Aufnahmeschlitz (7) ladbar und ein mit einem Kleidungsstück behängter Kleiderbügel (9), nachdem ein Kleidungsstück über den Kleiderträger (4) und den im Aufnahmeschlitz (7) aufgenommenen Kleiderbügel gezogen wurde, selbsttätig aus dem Aufnahmeschlitz entladbar. Um die Arbeitsgeschwindigkeit zu erhöhen und ein Gefährdung der Bedienungsperson zu verhindern, sind eine Anzahl von n Kleiderträgern (4), wobei n größer als 1 ist, in gleichen Abständen hintereinander auf einem Umlaufförderer (2) angeordnet, der an n gleich weit auseinanderliegenden Haltestellen anhaltbar ist, von denen wenigstens eine innerhalb und wenigstens eine außerhalb des Lade- und Entladebereichs liegt.

Fig. 2

EP 0 335 062 A1

## Vorrichtung zum Aufhängen von Kleidungsstücken auf Kleiderbügeln

Die Erfindung bezieht sich auf eine Vorrichtung zum Aufhängen von Kleidungsstücken, wie Pullovern, Hemden, Kleidern und dergleichen, auf Kleiderbügeln, mit wenigstens einem dem menschlichen Oberkörper in grober Annäherung nachgebildeten Kleiderträger, der in seiner Oberseite einen nach oben offenen Aufnahmeschlitz für einen Kleiderbügel aufweist, mit einem Lade- und Entladebereich, in dem ein Kleiderbügel mit hochragendem Haken selbsttätig in den Aufnahmeschlitz ladbar und ein mit einem Kleidungsstück behängter Kleiderbügel, nachdem ein Kleidungsstück über den Kleiderträger und den im Aufnahmeschlitz aufgenommenen Kleiderbügel gezogen wurde, selbsttätig aus dem Aufnahmeschlitz entladbar ist.

Bei einer gebräuchlichen Bügel-Förderanlage in der Bekleidungsindustrie und in Betrieben für chemische Reinigung von Kleidungsstücken werden die Kleidungsstücke direkt auf Kleiderbügeln befördert. Um die Kleidungsstücke auf die Kleiderbügel zu hängen, bevor sie weiterbefördert werden, kann eine Vorrichtung der gattungsgemäßen Art verwendet werden. Bei dieser bekannten Vorrichtung weist eine Ladeeinrichtung im Lade- und Entladebereich eine schräg abfallende Gleitstange auf, über die mit jedem Arbeitstakt der Vorrichtung ein Kleiderbügel aus einem Kleiderbügelmagazin abwärts gleitet, bis er mit seinem Haken in die Öffnung einer Zange eingreift, die ihn erfaßt und durch eine Schubstange über den Kleiderbügel-Aufnahmeschlitz des Kleiderträgers verschiebt. Dort wird die Zange selbsttätig geöffnet, so daß der Kleiderbügel abwärts in den Aufnahmeschlitz des Kleiderträgers fällt. Nach der Rückbewegung der die Zange tragenden Schubstange wird ein Kleidungsstück im Lade- und Entladebereich manuell über den Kleiderträger und dabei gleichzeitig über den Kleiderbügel gezogen. Anschließend wird der Kleiderbügel durch einen Greifarm einer im Lade- und Entladebereich angeordneten Entladeeinrichtung am Kleiderbügelhaken erfaßt, mitsamt dem Kleidungsstück hochgehoben, bis das Kleidungsstück von dem Kleiderträger abgezogen ist, und auf einer Förderstange eingehängt, von wo der Kleiderbügel mit dem Kleidungsstück weiterbefördert wird. Nach dem Überziehen eines Kleidungsstücks über den Kleiderträger und vor dem Entladen löst die Bedienungsperson eine Drehbewegung des Kleiderträgers um eine vertikale Achse aus, um die Vorder- und Rückseite des Kleidungsstücks auf eventuelle Fehler zu überprüfen.

Bei dieser Vorrichtung arbeitet die Bedienungsperson im Wechsel mit der Ladeeinrichtung und der Entladeeinrichtung, wobei beide Einrichtungen und die Bedienungsperson nacheinander pausieren müssen. Insbesondere sind Lade- und Entladeeinrichtung während des Behängens und der Drehung des Kleiderträgers für die Kontrolle des Kleidungsstücks außer Betrieb. Insgesamt ergibt sich daher eine geringe Betriebsgeschwindigkeit der Aufhängevorrichtung. Darüber hinaus besteht die Gefahr, daß die Bedienungsperson versehentlich in den Arbeitsbereich der Lade- und Entladeeinrichtungen gelangt und durch diese verletzt wird, da Lade- und Entladeeinrichtung sowie die Bedienungsperson abwechselnd in den Arbeitsbereich oberhalb des Kleiderträgers eingreifen. Insbe sondere bei einem Defekt der Entladeeinrichtung, der zu einem Herabfallen des Greifarms aus der angehobenen Stellung führt, während die Bedienungsperson ein neues Kleidungsstück über den Kleiderträger zieht, kann die Bedienungsperson erheblich am Kopf verletzt werden. Sodann ist bei unterschiedlichen Kleidungsstücken ein Wechsel des Kleiderträgers erforderlich.

Der Erfindung liegt die Aufgabe zugrunde, eine Vorrichtung der gattungsgemäßen Art anzugeben, die eine höhere Arbeitsgeschwindigkeit ermöglicht und die Bedienungsperson weniger gefährdet.

Erfindungsgemäß ist diese Aufgabe dadurch gelöst, daß eine Anzahl von n Kleiderträgern, wobei n größer als 1 ist, in gleichen Abständen hintereinander auf einem Umlaufförderer angeordnet sind, der an n gleich weit auseinanderliegenden Haltestellen anhaltbar ist, die jeweils einem Kleiderträger zugeordnet sind und von denen wenigstens eine innerhalb und wenigstens eine außerhalb des Lade- und Entladebereichs liegt.

Bei dieser Lösung kann das Aufhängen der Kleidungsstücke an einer außerhalb des Lade- und Entladebereiches liegenden Haltestelle manuell erfolgen, während gleichzeitig das Laden und/oder Entladen im Lade- und Entladebereich bewirkt wird. Die Bedienungsperson ist daher in einem außerhalb des Lade- und Entladebereiches liegenden Bereich tätig, in dem sie nicht durch die Lade- und/oder Entladeeinrichtung gefährdet ist. Da sie gleichzeitig mit der Lade- und/oder Entladeeinrichtung tätig sein kann, entfallen Wartezeiten, so daß eine höhere Arbeitsgeschwindigkeit möglich ist.

Sodann kann dafür gesorgt sein, daß n gleich 3 ist, daß im Lade- und Entladebereich an einer Haltestelle eine Ladeeinrichtung und an einer benachbarten Haltestelle eine Entladeeinrichtung angeordnet ist und daß die Ladeeinrichtung in Förderrichtung des Umlaufförderers hinter der Entladeeinrichtung liegt. Bei dieser Ausbildung erfolgt auch das Laden von Kleiderbügeln und das Entladen gleichzeitig, während gleichzeitig die Bedienungsperson Kleidungsstücke auf einem außerhalb des Lade- und Entladebereichs haltenden Träger hängen und gegebenenfalls kontrollieren kann.

Eine besonders einfache Ausbildung besteht darin, daß der Umlaufförderer ein Drehtisch ist, auf dem die Kleiderträger in gleichen Drehwinkelabständen angeordnet sind.

Vorzugsweise ist ferner dafür gesorgt, daß jeder Kleiderträger eine nach oben offene Kassette zur Aufnahme eines Kleiderbügels aufweist, daß die vertikale Tiefe der Kassette so gewählt ist, daß der Haken eines in der Kassette aufgenommemen Kleiderbügels zumindest teilweise über den Öffnungsrand der Kassette hinausragt und in der unteren Endlage der Kassette wenigstens zum größten Teil tiefer als der obere Rand des Kleiderträgers liegt, und daß die Kassette so weit durch eine Antriebseinrichtung relativ zum Kleiderträger hochschiebbar ist, bis der Haken des in der Kassette aufgenommenen Kleiderbügels oberhalb des Kleiderträgers durch eine Entladeeinrichtung erfaßbar ist. Diese Ausbildung ermöglicht das Aufhängen verschiedenartigster Kleidungsstücke, wie Pullover und Jacketts oder Mäntel mit hochstehendem Kragen, ohne daß der Kleiderträger ausgewechselt werden muß und ohne Behinderung des Aufhängens durch den Kleiderbügelhaken.

Die Kassette kann in dem Aufnahmeschlitz verschiebbar gelagert sein. Auf diese Weise wird sie zumindest über den größten Teil ihres Verschiebeweges allseitig geführt.

Ferner kann die Antriebseinrichtung im Kleiderträger angeordnet sein. Dies ergibt eine raumsparende Unterbringung der Antriebseinrichtung.

Sodann ist es möglich, daß jeder Kleiderträger eine vertikale relativ zum Umlaufförderer feststehende Platte aufweist und daß die Kassette zur Platte hin offen ist und zusammen mit der Platte den Aufnahmeschlitz begrenzt. Dies ergibt einen einfachen Aufbau des Kleiderträgers und der Kassette.

Vorzugsweise ist hierbei dafür gesorgt, daß die Platte des Kleiderträgers ein Loch und die der Platte abgekehrte Seitenwand der Kassette einen nach oben offenen Ausschnitt aufweist, daß die Breite von Loch und Ausschnitt etwa der Länge einer unteren Querstange eines Kleiderbügels entspricht und daß der untere Rand von Loch und Ausschnitt bei abgesenkter Kassette in der gleichen Höhe wie oder etwas tiefer als der obere Rand der in die Kassette aufgenommenen Kleiderbügels liegt. Dies ermöglicht das Aufhängen auch einer Hose dergleichen auf der Querstange eines in der Kassette aufgenommenen Kleiderbügels.

Ferner kann jeder Kleiderträger ein vertikal auf dem Umlaufförderer ortsfest angeordnetes Tragrohr aufweisen und die Antriebseinrichtung der Kassette eine koaxial in dem Tragrohr verschiebbar gelagerte, aus dem unteren Ende des Tragrohres vorstehende Stange, an deren oberen Endabschnitt die Kassette befestigt ist, und eine im Entladebereich unmittelbar vor deren Haltestelle in der Bahn des unteren Stangenendes angeordnete Rampe aufweisen, deren Höhe dem Hubweg der Kassette entspricht. Bei dieser Ausbildung wird die Hubkraft für jede Kassette aus der Bewegung des Umlaufförderers abgeleitet, so daß eine eigene Antriebseinrichtung für jede Kassette entfällt.

Ferner kann bei dieser Ausbildung die Platte seitlich am Tragrohr, über dessen oberes Ende hinausragend, befestigt sein, um sicherzustellen, daß der Haken eines in der abgesenkten Kassette aufgenommenen Kleiderbügels nicht über den oberen Rand des Kleiderträgers hinausragt und das Aufhängen eines Kleidungsstücks auf den Kleiderträger nicht behindert.

Sodann kann dafür gesorgt sein, daß die Entladeeinrichtung eine Hubeinrichtung mit einem Heber aufweist, der in seiner unteren Stellung mit dem Haken eines in der hochgeschobenen Kassette aufgenommenen Kleiderbügels in Eingriff bringbar ist. Mittels dieser Hubeinrichtung kann ein in der Kassette aufgenommener Kleiderbügel zusammen mit dem aufgehängten Kleidungsstück durch einfaches Anheben vom Kleiderträger entfernt werden.

Hierbei ist es günstig, wenn der Heber eine im wesentlichen horizontale, nach unten durchgebogene Mitnehmerstange aufweist, die in der unteren Stellung des Hebers quer in die Bahn des Hakens des in der hochgeschobenen Kassette aufgenommenen Kleiderbügels oberhalb der Haltestelle des Entladebereichs ragt. Bei dieser Ausbildung kommt der Haken eines in der Kassette aufgenommenen, mit einem Kleidungsstück behängten Kleiderbügels selbsttätig an der Haltestelle des Entladebereichs mit der Mitnehmerstange in Eingriff, so daß keine Greifer oder dergleichen betätigt zu werden brauchen, um den Eingriff zu bewirken.

Die Mitnehmerstange kann in ihrer oberen Endlage eine Förderstange überlappen und den Haken des aus der Kassette hochgehobenen Kleiderbügels in die Bahn eines den Haken von der Mitnehmerstange auf die Förderstange schie benden Übergabeförderers halten. Dies ergibt eine einfache Möglichkeit der Weiterbeförderung eines mit einem Kleidungsstück behängten Kleiderbügels nach der Abnahme vom Kleiderträger.

Der Übergabeförderer kann in einfacher Weise einen durch eine Kolben-Zylinder-Anordnung schwenkbaren Hebel aufweisen.

Vorzugsweise ist dafür gesorgt, daß die Hubeinrichtung einen Hubzylinder mit einem Kolben ohne Kolbenstange aufweist und der Heber mit dem Kolben durch einen axialen Schlitz im Hubzylinder hindurch verbunden ist, wobei der Schlitz in jeder Kolbenstellung bis an die Verbindung von Kolben und Heber abgedichtet ist. Dies ergibt eine geringe Bauhöhe der Hubeinrichtung.

Die Erfindung und ihre Weiterbildungen werden nachstehend anhand der Zeichnung bevorzugter Ausführungsbeispiele näher beschrieben. Es zeigen:

Fig. 1 eine Seitenansicht eines ersten Ausführungsbeispiels einer erfindungsgemäßen Vorrichtung,

Fig. 2 eine Draufsicht auf die Vorrichtung nach Fig. 1,

Fig. 3 eine weitere Seitenansicht der Vorrichtung nach Fig. 1,

Fig. 4 einen vergrößerten Ausschnitt der Fig. 3,

Fig. 5 eine Seitenansicht eines Teils der Entladeeinrichtung der Vorrichtung nach Fig. 1, teilweise im Schnitt V-V nach Fig. 6,

Fig. 6 eine Draufsicht auf einen Teil der Entladeeinrichtung nach Fig. 5,

Fig. 7 eine perspektivische Darstellung eines Teils eines zweiten Ausführungsbeispiels einer erfindungsgemäßen Vorrichtung, die gegenüber dem ersten Ausführungsbeispiel etwas abgewandelt ist, in einer Betriebsstellung kurz vor der Haltestelle des Entladebereichs,

Fig. 8 die Vorrichtung nach Fig. 7 in einer Betriebsstellung unmittelbar an der Haltestelle des Entladebereichs

Fig. 9 den oberen Teil der Entladeeinrichtung des Ausführungsbeispiels nach Fig. 7 in einer Betriebsstellung kurz vor der Übergabe eines mit einem Kleidungsstück behängten Kleiderbügels an eine Förderstange und

Fig. 10 die gleiche Darstellung wie die nach Fig. 9, jedoch mit einem etwas abgewandelten Kleiderträger.

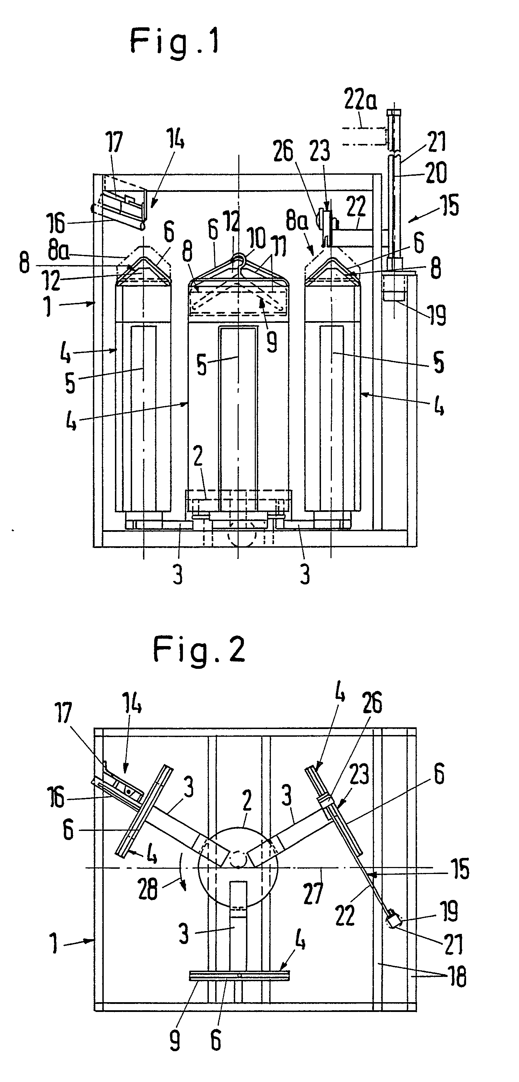

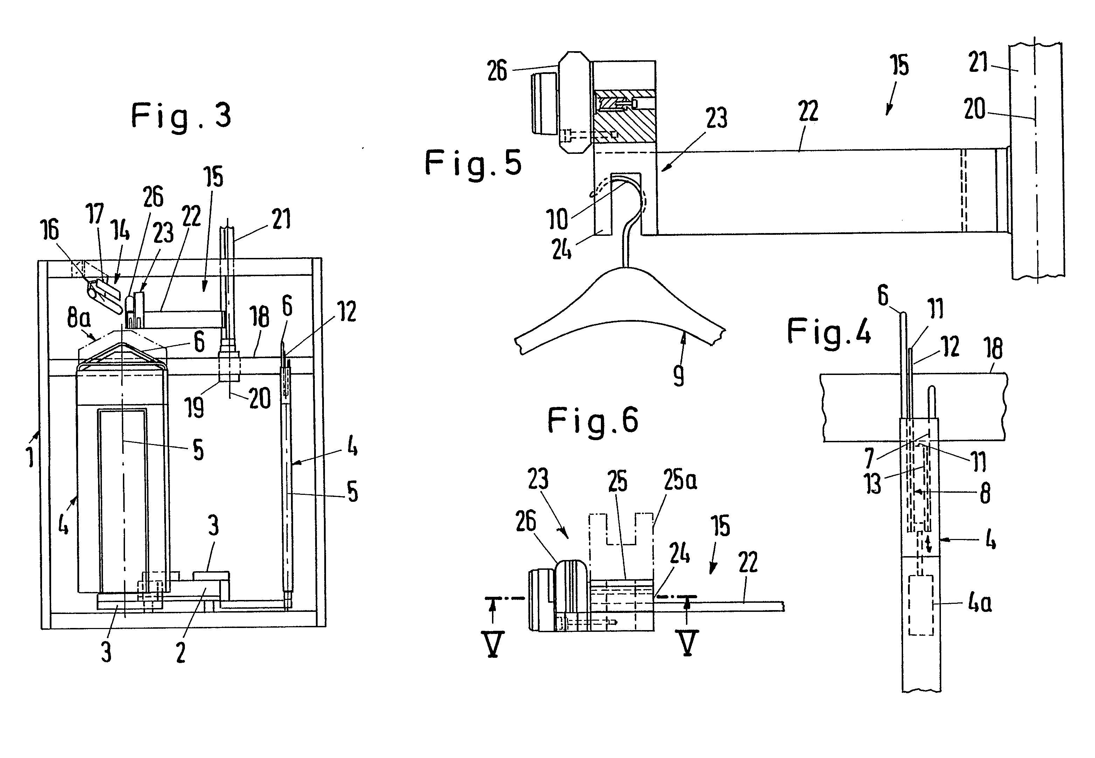

Die in den Fig. 1 bis 6 dargestellte Vorrichtung enthält in einem Gestell 1 einen Umlaufförderer in Form eines Drehtisches 2, der als Rundschalttisch ausgebildet ist. Auf radial verlaufenden und in Drehwinkelabständen von 120° auseinanderliegenden Tragarmen 3 des Drehtisches 2 ist jeweils ein Kleiderträger 4 um einen vertikale Mittelachse 5 drehbar gelagert. Jeder Kleiderträger 4 ist in grober Annäherung dem menschlichen Oberkörper nachgebildet, wobei sein oberer durch ein Rohr gebildeter Rand 6 zwei im stumpfen Winkel zueinander verlaufende, die Schultern des menschlichen Körpers darstellende Abschnitte aufweist. Ferner hat jeder Kleiderträger 4 in seiner Oberseite einen nach oben offenen Aufnahmeschlitz 7 (Fig. 4), in dem eine nach oben offene Fassung 8, nachstehend Kassette genannt, zur Aufnahme eines Kleiderbügels 9 angeordnet ist. Die vertikale Tiefe der Kassette 8 und des Aufnahmeschlitzes 7 sind so gewählt, daß der Haken 10 eines in der Kassette 8 aufgenommenen Kleiderbügels 9 zumindest teilweise über den Öffnungsrand 11 der Kassette 8 hinausragt und wenigstens zum größten Teil tiefer als der obere Rand 6 des Kleiderträgers 4 liegt. Die eine Seitenwand 12 der Kassette ist etwas höher als die andere Seitenwand 13, wobei der obere Rand 11 ebenfalls der Schulterkontur des menschlichen Oberkörpers grob angenähert ist und etwa dem Verlauf des oberen Randes 6 des Kleiderträgers 4 entspricht. Die Kassette 8 ist aus einer unteren Endlage, in der der obere Rand 11 der Seitenwand 12 tiefer als der obere Rand 6 des Kleiderträgers 4 liegt, mittels einer im Kleiderträger 4 angeordneten Antriebseinrichtung 4a in Form einer Kolben-Zylinder-Anordnung, die nur in Fig. 4 dargestellt ist, obwohl in jedem Kleiderträger jeweils eine derartige Antriebseinrichtung 4a vorgesehen ist, aus der unteren in Fig. 4 dargestellten Lage so weit aus dem Aufnahmeschlitz 7 hochschiebbar, bis ihr oberer Rand 11 und der Haken 10 eines in der Kassette 8 aufgenommenen Kleiderbügels 9 oberhalb des oberen Randes 6 des Aufnahmeschlitzes 7 liegen. Die ausgefahrene obere Lage der Kassette 8 ist in den Fig. 1 und 3 mit 8a bezeichnet.

Der Drehtisch 2 hat auf seiner Unterseite einen (in der Zeichnung nicht erkennbaren) Drehantrieb, der mittels eines durch die Bedienungsperson betätigbaren Fußschalters einschaltbar und mittels Endschaltern in um 120° auseinanderliegenden Drehwinkelstellungen anhaltbar ist, die jeweils einem Kleiderträger 4 zugeordneten Haltestelle entsprechen. Auf diese Weise lassen sich die Kleiderträger 4 schrittweise von einer Haltestelle zur nächsten befördern. Ein und derselbe Kleiderträger 4 ist in der ersten Drehwinkelstellung einer Ladeeinrichtung 14, in der zweiten Drehwinkelstellung einer "Aufbügelstelle" und in der dritten Drehwinkelstellung einer Entladeeinrichtung 15 zugeordnet.

Die Ladeeinrichtung 14 enthält eine schräg abfallende Gleitstange 16, von der nur der unterste Endabschnitt dargestellt ist, und eine Führungsschiene 17 für die Kleiderbügelhaken 10. Oberhalb des Endabschnitts der Gleitstange 16 ist ein nicht dargestellter Vereinzelner im Zuge der Gleitstange 16 angeordnet, der bei jeder Weiterdrehung des Drehtisches 2 jeweils nur den vordersten von mehreren sich vor dem Vereinzelner auf der Gleitstange stauenden Kleiderbügeln 9 durchläßt. Das untere Ende der Gleitstange 16 liegt oberhalb des Aufnahmeschlitzes 7 eines an der ersten Haltestelle haltenden Kleiderträgers 4.

Die Endladeeinrichtung 15 hat einen auf Querträgern 18 des Gestells 1 befestigten Drehantrieb 19 mit vertikaler Drehachse 20, der einen pneumatisch betriebenen Hubzylinder 21 um einen vorbestimmten Drehwinkel zu drehen vermag. Quer zu dem senkrecht stehenden Hubzylinder 21 ist an diesem ein horizontaler Greifarm 22 befestigt. Am freien Ende des Greifarms 22 ist ein Greifer 23 mit einem feststehenden etwa gabelförmigen Greiferteil 24 und einem um eine horizontale Achse schwenkbaren Greiferteil 25 angebracht. Der schwenkbare Greiferteil 25 ist durch einen pneumatischen Drehantrieb 26 aus einer senkrechten Lage, in der er den Haken 10 eines Kleiderbügels 9 zwischen sich und dem feststehenden Greiferteil 24 einklemmt, und der in Fig. 6 strichpunktiert dargestellten Offenstellung 25a verschwenkbar.

Während des Betriebs fällt der vorderste, von dem Vereinzelner freigegebene Kleiderbügel 9 am freien Ende der Gleitstange 16 herab und in die in dem Aufnahmeschlitz 7 des darunter haltenden Kleiderträgers 4' versenkt angeordnete Kassette 8. Nach einer Drehung des Drehtisches 2 um seine vertikale Mittelachse um 120°, die von der Bedienungsperson durch Betätigung des Fußschalters ausgelöst wird, hält der Drehtisch 2 mit dem in der Kassette 8 aufgenommen Kleiderbügel 9 in der dargestellten Drehwinkellage in Fig. 2 unten, d.h. außerhalb des Lade- und Entladebereichs, der in Fig. 2 oberhalb der durch die vertikale Drehachse des Drehtisches 2 verlaufenden Querlinie 27 liegt. In dieser Drehwinkkelstellung ist der mit einem Kleiderbügel 9 beladene Kleiderträger 4 für die Bedienungsperson, unbehindert durch die Ladeeinrichtung 14 und die Entladeeinrichtung 15, zugänglich. Die Bedienungsperson kann daher ein Kleidungsstück von oben her über den Kleiderträger 4 und den darin aufgenommenen Kleiderbügel 9 ziehen, während gleichzeitig der in Förderrichtung 28 des Drehtisches 2 folgende Kleiderträger 4 durch die Ladeeinrichtung 14 mit einem Kleiderbügel beladen wird. Anschließend löst sie wieder den Drehantrieb des Drehtisches 2 aus, so daß der Drehtisch erneut um 120° weitergedreht wird. Nunmehr befindet sich der mit einem Kleidungsstück behängte Kleiderträger 4 unter dem Greifer 23 der Entladeeinrichtung 15. An dieser Haltestelle wird die im Kleiderträger 4 vorgesehene Hubantriebseinrichtung 4a (Fig. 4) für die in dem Aufnahmeschlitz 7 ihre untere Lage einnehmende Kassette 8 selbsttätig eingeschaltet, so daß die Kassette 8 mitsamt dem darin enthaltenen Kleiderbügel 9 und dem auf dem Kleiderträger 4 hängenden Kleidungsstück in die Stellung 8a angehoben wird, in der der Haken 10 des Kleiderbügels 9 oberhalb des oberen Randes 6 des Kleiderträgers 4 und oberhalb des oberen Randes des Kragens des Kleidungsstücks liegt, so daß der Haken 10 frei zugänglich ist. In dieser oberen Endstellung 8a der Kassette 8 wird nunmehr die Endladeeinrichtung 15 ausgelöst, wonach der Greifer 23 öffnet, der Hubzylinder 21 so weit abgesenkt wird, bis der Greifer 23 den Kleiderbügelhaken 10 (Fig. 5) erfassen kann. Anschließend wird der Greifer 23 durch den Drehantrieb 26 geschlossen und der Greifarm 22 zusammen mit dem Kleiderbügel 9 und dem daran hängenden Kleidungsstück in die obere Endlage 22a hochgehoben und schließlich um die Drehachse 20 zur Seite geschwenkt, wo der Kleiderbügelhaken 10 auf eine weitere nichtdargestellte Förderstange zur Weiterbeförderung von Kleiderhaken und Klei dungsstück durch eine anschließende Förderanlage gehängt wird. Während dieses Entladevorgangs kann wiederum gleichzeitig in den währenddessen unter dem Ende der Gleitstange 16 der Ladeeinrichtung haltenden Kleiderträger 4 ein Kleiderbügel 9 geladen und der außerhalb des Lade- und Entladebereichs (in Fig. 2 unten) haltende Kleiderträger 4 manuell mit einem Kleidungsstück behängt werden. Nach dem Entladen durch die Entladeeinrichtung 15 wird der Drehtisch erneut um 120° weitergedreht, so daß er wieder seine Ausgangslage einnimmt, von der aus sich der gesamte Zyklus wiederholt.

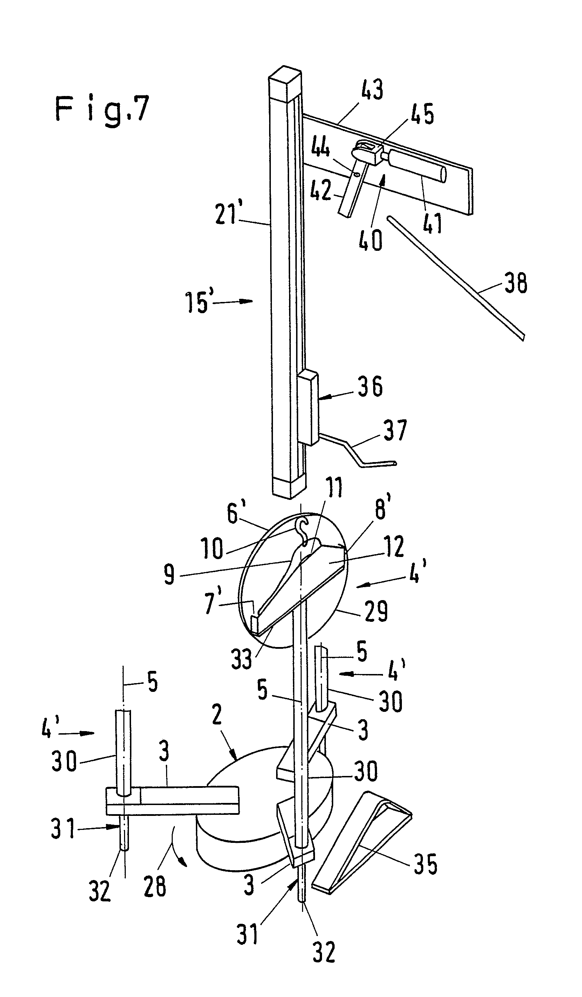

Das Ausführungsbeispiel nach den Fig. 7 bis 9 entspricht hinsichtlich der Ladeeinrichtung und dem Gestell dem Ausführungsbeispiel nach den Fig. 1 bis 6. Diese Teile sind daher zur Vereinfachung der Darstellung in den Fig. 7 bis 9 weggelassen. Soweit sich die Einzelteile der Ausführungsbeispiele entsprechen, sind gleiche Bezugszeichen verwendet worden.

Das Ausführungsbeispiel nach den Fig. 7 bis 9 unterscheidet sich von dem ersten Ausführungsbeispiel im wesentlichen nur durch die Ausbildung der Kleiderträger 4', von denen nur einer zur Vereinfachung der Darstellung ausführlicher dargestellt ist, und durch die Entladeeinrichtung 15'.

Jeder Kleiderträger 4' hat eine vertikale kreisrunde Platte 29 aus durchsichtigem Kunststoff, ein vertikal auf einem der Tragarme 3 angeordnetes, um die Mittelachse 5 drehbar gelagertes Tragrohr 30, durch das eine Stange 31 koaxial und vertikal verschiebbar hindurchgeführt ist, wobei das untere Ende 32 der Stange 31 auch durch eine entsprechende Bohrung des Tragarms 3 nach unten vorsteht und das obere Ende der Stange 31 an der Unterseite der Kassette 8' befestig ist. Die Platte 29 ist seitlich am Tragrohr 30, über dessen oberes Ende hinausragend, und an einer auf dem oberen Ende des Tragrohres 30 befestigten Platte 33 befestigt, wobei die Stange 31 ein mit dem Tragrohr 30 koaxiales Loch in der Platte 33 ebenfalls verschiebbar durchsetzt. Die Kassette 8' ist im Horizontalquerschnitt etwa U-förmig, d.h. zur Platte 29 hin offen, jedoch relativ zu dieser verschiebbar, wobei sie zusammen mit der Platte 29 den Aufnahmeschlitz 7' für den Kleiderbügel 9 begrenzt.

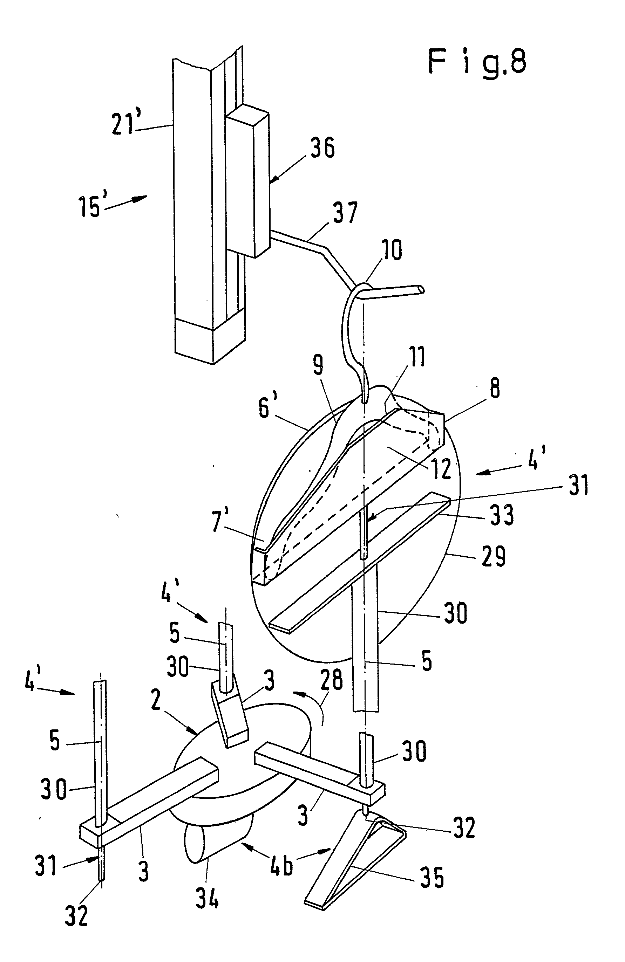

Die Antriebseinrichtung 4b weist nach Fig. 8 im wesentlichen den Drehantriebsmotor 34 des Drehtisches 2, eine Rampe 35 und die Stange 31 auf. Die Rampe 35 ist im Entladebereich unmittelbar vor der dem Entladebereich zugeordneten Haltestelle in der Bahn des unteren Stangenendes 32 angeordnet und steigt in Förder- bzw. Drehrichtung 28 des Drehtisches 2 zu dieser Haltestelle hin an. Die Höhe der Rampe 35 entspricht dem Hubweg der Kassette 8'.

Die Entladeeinrichtung 15' weist eine Hubeinrichtung 21' in Form eines Hubzylinders mit einem Heber 36 auf, der mit einer im wesentlichen horizontalen, nach unten durchgebogenen Mitnehmerstange 37 versehen ist, die in der unteren Stellung des Hebers 36 quer in die Bahn des Hakens 10 des in der hochgeschobenen Kassette 8' nach Fig. 8 aufgenommenen Kleiderbügels 9 oberhalb der Haltestelle des Entladebereichs ragt. Der Hubzylinder 21' enthält einen Kolben ohne Kolbenstange, und der Heber 36 ist mit dem Kolben durch einen axialen Schlitz im Hubzylinder 21' hindurch verbunden, wobei der Schlitz in jeder Kolbenstellung bis an die Verbindung von Kolben und Heber abgedichtet ist.

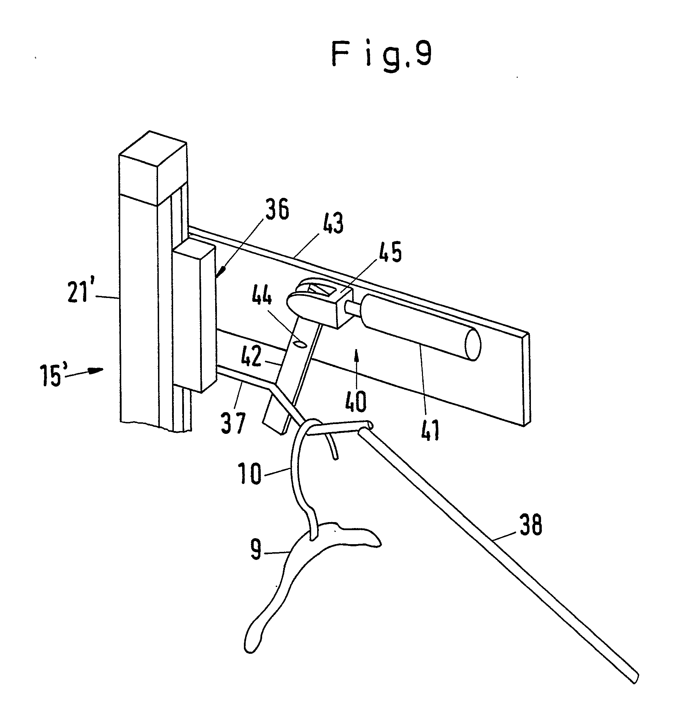

In ihrer oberen Endlage nach Fig. 9 überlappt die Mitnehmerstange 37 eine Förderstange 38 und hält den Haken 10 des aus der Kassette 8' hochgehobenen Kleiderbügels 9 in die Bahn eines den Haken 10 von der Mitnehmerstange 37 auf die Förderstange 38 schiebenden Übergabeförderers 40. Der Übergabeförderer 40 weist einen durch eine Kolben-Zylinder-Anordnung 41 schwenkbaren Hebel 42 auf.

Die Kolben-Zylinder-Anordnung 41 ist an einem mit dem Hubzylinder 21' starr verbundenen horizontalen Tragarm 43 befestigt, und der Hebel 42 ist um einen horizontalen, am Tragarm 43 befestigten Gelenkbolzen 44 in einer vertikalen Ebene parallel zur Mitnehmerstange 37 schwenkbar, und zwar gegen die Kraft einer nicht dargestellten Rückstellfeder. Zu diesem Zweck ist an der Kolbenstange des Kolbens der Kolben-Zylinder-Anordnung 41 eine Gabel 45 befestigt, die den einen Hebelarm des Hebels 42 zwischen ihren Schenkeln aufnimmt.

Die Wirkungsweise des Ausführungsbeispiels nach den Fig. 7 bis 9 entspricht im wesentlichen dem ersten Ausführungsbeispiel, wobei das Beladen der Kassette 8' mit einem Kleiderbügel 9 in der Ladeeinrichtung und das Überziehen eines Kleidungsstücks über einen Kleiderträger 4' an der Haltestelle zwischen Lade- und Entladeeinrichtung in der gleichen Weise wie bei dem ersten Ausführungsbeispiel erfolgt. Beim Entladen gleitet das untere Ende 32 der Stange 31 während der Drehung des Drehtisches 2 aus der in Fig. 7 dargestellten Lage bis in die in Fig. 8 dargestellte Lage auf der Rampe 35 aufwärts, so daß die Kassette 8' mit dem Kleiderbügel 9 angehoben und beim Erreichen der oberen Endstellung der Kassette 8' nach Fig. 8 der Haken 10 mit der in die Bahn des Hakens 10 ragenden Mitnehmerstange 37 in Eingriff kommt. Durch Betätigung des Fußschalters wird jetzt die Druckluftzufuhr zum Hubzylinder 21' freigegeben, so daß der Heber 36 zusammen mit dem Kleiderbügel 9 und dem darauf hängenden (nicht dargestellten) Kleidungsstück in die obere Endstellung nach Fig. 9 gehoben wird. In dieser oberen Endstellung stößt der Heber 36 an einen Endschalter, der (über ein Magnetventil) die Druckluftzufuhr zur Kolben-Zylinder-Anordnung 41 freigibt, so daß die Kolbenstange der Kolben-Zylinder-Anordnung 41 ausgeschoben und der Hebel 42 entgegen dem Uhrzeigersinne in Fig. 9 geschwenkt wird und den Haken 10 auf die schräg nach unten abfallende Förderstange 38 schiebt.

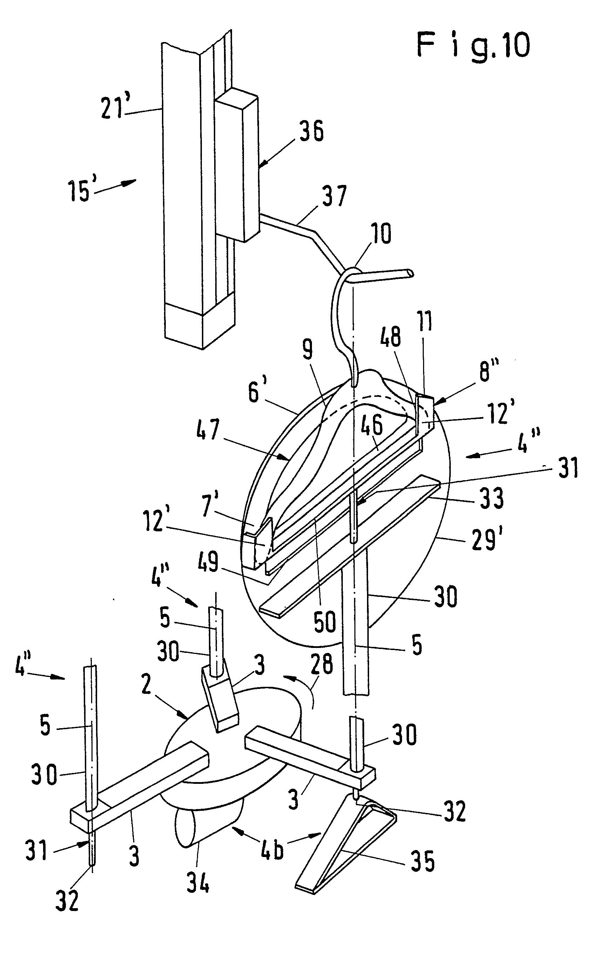

Fig. 10 zeigt ein Ausführungsbeispiel, das gegenüber dem nach den Fig. 7 bis 9 lediglich hinsichtlich des Kleiderträgers 4" abgewandelt ist. Dieser Kleiderträger 4" ermöglicht das Aufhängen eines Oberbekleidungsstücks und/oder einer Hose oder dergleichen, wobei der Kleiderbügel 9 zum Einhängen einer Hose oder dergleichen mit einer unteren Querstange 46, die runde Platte 29' mit einem etwa halbkreisförmigen Loch 47 und die vordere Seitenwand 12' mit einem nach oben offenen Ausschnitt 48 versehen ist. Die Breite des Loches 47 und des Ausschnitts 48 entspricht etwa der Länge der Querstange 46 des Kleiderbügels 9. Der untere gerade Rand 49 des Loches 47 liegt bei abgesenkter Lage der Kassette 8" etwa in Höhe der Querstange 46 des in die Kassette 8" eingesetzten Kleiderbügels 9. Der Ausschnitt 48 erstreckt sich vom oberen Rand 11 der Kassette 8" bis zu deren Boden 50, kann aber auch etwas höher enden, nämlich in Höhe oder nur etwas unterhalb des oberen Randes der Querstange 46. Eine aufzuhängende Hose wird bei diesem Ausführungsbeispiel in der abgesenkten Lage der Kassette 8", d.h. an der Haltestelle, die um 120° vor der in Fig. 10 dargestellten Drehwinkellage des vollständig dargestellten Kleiderträgers 4" liegt, etwa um die halbe Hosenlänge durch den Ausschnitt 48, die mittlere Öffnung des Kleiderbügels 9 und das Loch 47 hindurchgezogen und dann fallengelassen werden, so daß die eine Hälfte der Hosenlänge auf der einen Seite und die andere Hälfte auf der anderen Seite der Querstange 46 herabhängt. Zusätzlich kann ein Oberbekleidungsstück, z.B. das zur Hose gehörende Jackett eines Anzugs, auf dem Kleiderbügel 9 aufgehängt werden. Das Laden und Entladen des Kleiderbügels 9 geschieht in der gleichen Weise wie bei dem Ausführungsbeispiel nach den Fig. 7 bis 9.

Eine Abwandlung der dargestellten Ausführungsbeispiele kann darin bestehen, daß anstelle der an getrennten Haltestellen des Drehtisches 2 angeordneten Ladeeinrichtung 14 und Entladeeinrichtung 15 bzw. 15' eine das Laden und Entladen bewirkende Lade- und Entladeeinrichtung an derselben Haltestelle und die Aufbügelstelle, an der das Kleidungsstück auf den Kleiderträger 4 bzw. 4' gehängt wird, in einem 180°-Drehwinkelabstand von der Lade- und Entladestelle vorgesehen ist. In diesem Fall kommt man mit nur zwei Haltestellen des Drehtisches aus, ohne daß die Arbeitsgeschwindigkeit insgesamt verringert wird, wenn die Lade- und Entladeeinrichtung mit der gleichen Geschwindigkeit wie oder schneller als die Bedienungsperson beim Überziehen und gegebenenfalls Behandeln der Kleidungsstücke arbeitet.

Sodann ist es möglich, weitere Haltestellen des Drehtisches außerhalb des Lade- und Entladebereichs vorzusehen, an denen andere Behandlungen des aufgehänten Kleidungsstücks vorgenommen werden.

Ferner kann anstelle des Drehtisches ein anderer Umlaufförderer verwendet werden, z.B. ein Kettenförderer mit einer in einer horizontalen Ebene über zwei oder mehr Kettenräder umlaufenden Kette.

## Ansprüche

1. Vorrichtung zum Aufhängen von Kleidungsstücken, wie Pullovern, Hemden, Kleidern und dergleichen, auf Kleiderbügeln, mit wenigstens einem dem menschlichen Oberkörper in grober Annäherung nachgebildeten Kleiderträger, der in seiner Oberseite einen nach oben offenen Aufnahmeschlitz für einen Kleiderbügel aufweist, mit einem Lade- und Entladebereich, in dem ein Kleiderbügel mit hochragendem Haken selbsttätig in den Aufnahmeschlitz ladbar und ein mit einem Kleidungsstück behängter Kleiderbügel, nachdem ein Kleidungsstück über den Kleiderträger und den im Aufnahmeschlitz aufgenommenen Kleiderbügel gezogen wurde, selbsttätig aus dem Aufnahmeschlitz entladbar ist, **dadurch gekennzeichnet,** daß eine Anzahl von n Kleiderträgern (4; 4'; 4"), wobei n größer als 1 ist, in gleichen Abständen hintereinander auf einem Umlaufförderer (2) angeordnet sind, der an an gleich weit auseinanderliegenden Haltestellen anhaltbar ist, die jeweils einem Kleiderträger (4; 4'; 4") zugeordnet sind und von denen wenigstens eine innerhalb und wenigstens eine außerhalb des Lade- und Entladebereichs liegt.

2. Vorrichtung nach Anspruch 1, dadurch gekennzeichnet, daß n gleich 3 ist, daß im Lade- und Entladebereich an einer Haltestelle eine Ladeeinrichtung (14) und an einer benachbarten Haltestelle eine Entladeeinrichtung (15; 15') angeordnet ist und daß die Ladeeinrichtung (14) in Förderrichtung des Umlaufförderers hinter der Entladeeinrichtung (15; 15') liegt.

3. Vorrichtung nach Anspruch 1 oder 2, dadurch gekennzeichnet, daß der Umlaufförderer ein Drehtisch (2) ist, auf dem die Kleiderträger (4; 4'; 4") in gleichen Drehwinkelabständen angeordnet sind.

4. Vorrichtung nach einem der Ansprüche 1 bis 3, dadurch gekennzeichnet, daß jeder Kleiderträger (4; 4') eine nach oben offene Kassette (8; 8'; 8") zur Aufnahme eines Kleiderbügels (9) aufweist, daß die vertikale Tiefe der Kassette (8; 8'; 8") so gewählt ist, daß der Haken (10) eines in der Kassette (8; 8'; 8") aufgenommenen Kleiderbügels (9) zumindest teilweise über den Öffnungsrand (11) der Kassette (8; 8'; 8") hinausragt und in der unteren Endlage der Kassette wenigstens zum größten Teil tiefer als der obere Rand (6; 6') des Kleiderträgers (4; 4'; 4") liegt, und daß die Kassette (8; 8'; 8") so weit durch eine Antriebseinrichtung (4a; 4b) relativ zum Kleiderträger hochschiebbar ist, bis der Haken (10) des in der Kassette (8; 8'; 8") aufgenommenen Kleiderbügels (9) oberhalb des Kleiderträgers durch eine Entladeeinrichtung (15; 15') erfaßbar ist.

5. Vorrichtung nach Anspruch 4, dadurch gekennzeichnet, daß die Kassette (8) in dem Aufnahmeschlitz (7) verschiebbar gelagert ist.

6. Vorrichtung nach Anspruch 4 oder 5, dadurch gekennzeichnet, daß die Antriebseinrichtung (4a) im Kleiderträger (4) angeordnet ist.

7. Vorrichtung nach Anspruch 4, dadurch gekennzeichnet, daß jeder Kleiderträger (4'; 4") eine vertikale relativ zum Umlaufförderer (2) feststehende Platte (29; 29") aufweist und daß die Kassette (8'; 8") zur Platte (29; 29") hin offen ist und zusammen mit der Platte (29; 29") den Aufnahmeschlitz (7') begrenzt.

8. Vorrichtung nach Anspruch 7, dadurch gekennzeichnet, daß die Platte (29') des Kleiderträgers (4") ein Loch (47) und die der Platte (29') abgekehrte Seitenwand (12') der Kassette (8") einen nach oben offenen Ausschnitt (48) aufweist, daß die Breite von Loch (47) und Ausschnitt (48) etwa der Länge einer unteren Querstange (46) eines Kleiderbügels (9) entspricht und daß der untere Rand (49, 50) von Loch (47) und Ausschnitt (48) bei abgesenkter Kassette (8") in der gleichen Höhe wie oder etwas tiefer als der obere Rand des in die Kassette (8") aufgenommenen Kleiderbügels (9) liegt.

9. Vorrichtung nach Anspruch 7 oder 8, dadurch gekennzeichnet, daß jeder Kleiderträger (4'; 4") ein vertikal auf dem Umlaufförderer (2) ortsfest angeordnetes Tragrohr (30) aufweist und daß die Antriebseinrichtung (4b) der Kassette (8'; 8") eine koaxial in dem Tragrohr (30) verschiebbar gelagerte, aus dem unteren Ende des Tragrohres (30) vorstehende Stange (31), an deren oberen Endabschnitt die Kassette (8'; 8") befestigt ist, und eine im Entladebereich unmittelbar vor deren Haltestelle in der Bahn des unteren Stangenendes (32) angeordnete Rampe (35) aufweist, deren Höhe dem Hubweg der Kassette (8'; 8'') entspricht.

10. Vorrichtung nach Anspruch 9, dadurch gekennzeichnet, daß die Platte (29; 29') seitlich am Tragrohr (30), über dessen oberes Ende hinausragend, befestigt ist.

11. Vorrichtung nach einem der Ansprüche 4 bis 10, dadurch gekennzeichnet, daß die Entladeeinrichtung (15') eine Hubeinrichtung (21') mit einem Heber (36) aufweist, der in seiner unteren Stellung mit dem Haken (10) eines in der hochgeschobenen Kassette (8'; 8'') aufgenommenen Kleiderbügels (9) in Eingriff bringbar ist.

12. Vorrichtung nach Anspruch 11, dadurch gekennzeichnet, daß der Heber (36) eine im wesentlichen horizontale, nach unten durchgebogene Mitnehmerstange (37) aufweist, die in der unteren Stellung des Hebers (36) quer in die Bahn des Hakens (10) des in der hochgeschobenen Kassette (8'; 8'') aufgenommenen Kleiderbügels (9) oberhalb der Haltestelle des Entladebereichs ragt.

13. Vorrichtung nach Anspruch 12, dadurch gekennzeichnet, daß die Mitnehmerstange (37) in ihrer oberen Endlage eine Förderstange (38) überlappt und den Haken (10) des aus der Kassette (8'; 8'') hochgehobenen Kleiderbügels (9) in die Bahn eines den Haken (10) von der Mitnehmerstange (37) auf die Förderstange (38) schiebenden Übergabeförderers (40) hält.

14. Vorrichtung nach Anspruch 13, dadurch gekennzeichnet, daß der Übergabeförderer (40) einen durch eine Kolben-Zylinder-Anordnung (41) schwenkbaren Hebel (42) aufweist.

15. Vorrichtung nach einem der Ansprüche 11 bis 14, dadurch gekennzeichnet, daß die Hubeinrichtung einen Hubzylinder (21') mit einem Kolben ohne Kolbenstange aufweist und der Heber (36) mit dem Kolben durch einen axialen Schlitz im Hubzylinder (21') hindurch verbunden ist, wobei der Schlitz in jeder Kolbenstellung bis an die Verbindung von Kolben und Heber (36) abgedichtet ist.

# Fig.1

# Fig.2

Fig.3

Fig.5

Fig.4

Fig.6

EP 0 335 062 A1

Fig.7

Fig.8

# Fig.9

F i g.10

Europäisches
Patentamt

**EUROPÄISCHER RECHERCHENBERICHT**

Nummer der Anmeldung

| | **EINSCHLÄGIGE DOKUMENTE** | | EP 89100076.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A1 - 0 209 017 (GÖTZ) * Gesamt * | 1 | B 65 G 49/00 B 65 G 47/61 |
| A | DE - A1 - 2 902 724 (J. SANDT AG.) * Ansprüche 1,2,4,5; Fig. 1,2 * | 1 | |

RECHERCHIERTE SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 10-07-1989 | PISSENBERGER |